# EUROPEAN PATENT SPECIFICATION

(11) **EP 4 588 691 B1**
(45) Date of publication and mention of the grant of the patent: **15.07.2026**
(21) Application number: 23887493.7
(22) Date of filing: 30.06.2023
(51) Int. Cl.: B60C 7/14, B60B 9/06, B60C 7/26

(54) **NON-PNEUMATIC TIRE**
LUFTLOSER REIFEN
BANDAGE NON PNEUMATIQUE

(30) Priority: 08.11.2022 CN 202211395641
(43) Date of publication of application: 23.07.2025
(73) Proprietor: Shandong Linglong Tyre Co., Ltd., Yantai, Shandong 265400 (CN)
(72) Inventor: WANG, Feng, Yantai, Shandong 265400 (CN); LI, Dashuang, Yantai, Shandong 265400 (CN); LU, Bo, Yantai, Shandong 265400 (CN); XU, Jing, Yantai, Shandong 265400 (CN); ZHAO, Gaowei, Yantai, Shandong 265400 (CN); SONG, Mingliang, Yantai, Shandong 265400 (CN); LIU, Weijing, Yantai, Shandong 265400 (CN); TAN, Dongni, Yantai, Shandong 265400 (CN)
(74) Representative: Bayramoglu et al.
(86) International application number: PCT/CN2023/104318
(87) International publication number: WO 2024/098797

(56) References cited:
- CN-A- 103 350 615
- CN-A- 110 525 128
- CN-A- 111 301 062
- CN-A- 115 257 227
- CN-A- 115 648 857
- CN-U- 213 629 683
- CN-U- 216 942 500
- US-A- 1 076 003
- US-A1- 2009 211 675
- US-A1- 2014 034 198
- US-A1- 2015 122 382
- US-A1- 2020 384 801

## Description

### TECHNICAL FIELD

The present invention belongs to the technical field of tires, and in particular to a non-pneumatic tire.

### BACKGROUND TECHNOLOGY

At present, tires are divided into pneumatic tires and non-pneumatic tires. Pneumatic tires are hermetically sealed by rubber and are supported by steel wires and cords, but when they are pricked by sharp objects, they will have the danger of puncture, which will make the vehicle unable to run normally. The birth of non-pneumatic tire successfully solved the problem that vehicles can't run due to puncture. The non-pneumatic tire use structure and materials to realize the function of bearing and cushioning. Compared with traditional pneumatic tires, non-pneumatic tires have characteristics such as flat free, puncture resistance, economy, and wear resistance. The invention patent with the publication number of CN1278880C discloses a non-pneumatic tire, which is used to solve the shortcoming of pneumatic tires being easy to leak and burst. The invention patent is characterized in that one or a plurality of groups of interconnected plate-like elastic supports (referred to as wheel blades for short) are mounted along the circumferential direction of the wheel to bear the load of the wheel. A device embodying the patent includes four components, the first is a rim as a mounting and bearing base, the second is one or a plurality of groups of wheel blades made of elastic materials, and the third is a wrapping piece or outer tire and liner that wraps the wheel blades to prevent them from being eroded by sand and other things, as well as bolts and nuts for assembling and pretensioning the device. The patented device features simple structure, reliable operation, stable operation and long service life, and is widely used in vehicles and machinery that require high safety, stationarity and reliability of tires. However, the above-mentioned patent has the following shortcomings: the plate-like elastic support used in the non-pneumatic tire is fixedly connected with the hub only by bolts and nuts, which easily causes the loosening of the plate-like elastic support because there is no good locking mechanism; secondly, the non-pneumatic tire do not have a good cushion mechanism, which makes it difficult to support and shock absorb the whole tire, resulting in poor durability of the tire. Therefore, improvement is needed. CN111301062A discloses a non-inflatable wheel based on a negative poisson ratio structure. The non-inflatable wheel comprises a hub, a negative poisson ratio supporting body and an outer tire surface, wherein the negative poisson ratio supporting body is installed on the outer side of the hub in a surrounding mode, an outer tread is installed on the outer side of the negative poisson ratio supporting body, in a surrounding mode, the hub is a flat-bottom rim, spokes and mounting holes are the same as those of a conventional hub, the negative poisson ratio supporting body has the elastic deformation capacity, the outer tread is made of low-rolling-resistance rubber, and the tread is provided with patterns for increasing friction force.

### CONTENT OF THE INVENTION

An objective of the present invention is to provide a non-pneumatic tire to solve the above problems.

In order to solve the above problems, the present invention provides a technical solution:
A non-pneumatic tire includes a tread, a protective film, a cushion strip, a first support plate, a second support plate, a first bolt, a second bolt, a hub, a locking mechanism, and a cushion mechanism. The tread is provided with the protective film, the tread is provided with the cushion strip, the cushion strip is in contact with the first support plate, the cushion strip is in contact with the second support plate, the first support plate and the cushion strip are jointly provided with the first bolt, the second support plate and the cushion strip are jointly provided with the second bolt, the first support plate and the second support plate are jointly provided with the hub, the hub is provided with the locking mechanism, and the hub is provided with the cushion mechanism.

Preferably, the locking mechanism includes a fastening bolt, a clamping hole, an end plate, a guide rod, a first spring, an end block, a retaining ring, an elastic clamping ball, a mounting plate, a limiting plate, a splint, and an elastic body. The fastening bolt is movably connected in the hub, the fastening bolt is movably connected to the first support plate, the fastening bolt is movably connected to the second support plate, the fastening bolt is threaded with a nut arranged on the hub, the clamping hole is provided in the fastening bolt, the end plate is slidably connected in the hub, the guide rod is fixedly connected in the hub, the guide rod is slidably connected to the end plate, an outer side of the guide rod is provided with the first spring, one end of the first spring is welded with the hub, the other end of the first spring is welded with the end plate, the end block is fixedly connected to the end plate, the end block is slidably connected to the hub, the retaining ring is fixedly connected to the end block, the elastic clamping ball is fixedly connected to the end block, and the elastic clamping ball is slidably connected to the clamping hole. The mounting plate can be locked and fixed by providing the fastening bolt, and the fastening bolt can be inserted and limited under the cooperation of the end block, the elastic clamping ball and other structures, so as to avoid loosening of the fastening bolt.

Preferably, the mounting plate is slidably connected in the hub, the mounting plate is fixedly connected to the first support plate, the mounting plate is fixedly connected to the second support plate, and the mounting plate is movably connected to the fastening bolt. By providing the mounting plate, the first support plate and the second support plate are convenient for connecting and using.

Preferably, the limiting plate is fixedly connected in the hub, the splint is slidally sleeved on an outer side of the limiting plate, the splint is slidally connected to the hub, the elastic body is bonded to the splint, and the other end of the elastic body is bonded to the hub. By providing the splint, the mounting plate can be quickly positioned.

Preferably, the cushion mechanism includes a support sheet, a first hinge seat, a hinge plate, a second hinge seat, a top plate, a fixing seat, a support ring, a locking bolt, a connecting plate, a top rod, a second spring, a third spring, a friction point, a pressure resistant sheet, a friction sheet, and a stopper. The support sheet is contacted in the hub, the first hinge seat is fixedly connected to the support sheet, the hinge plate is hinged to the first hinge seat, the second hinge seat is hinged to the hinge plate, the top plate is slidally connected to the second hinge seat, the second spring is welded with the top plate, the other end of the second spring is welded with the fixing seat, the support ring is fixedly sleeved on an outer side of the fixing seat, the connecting plate is fixedly connected to the second hinge seat, the connecting plate is slidally connected to the top plate, the top rod is fixedly connected to the connecting plate, the top rod is slidally connected to the top plate, the third spring is welded with the connecting plate, and the other end of the third spring is welded with the top plate. Through the cooperation of the support sheet, the hinge plate, the second spring, the third spring and other structures, the hub can be supported and shock-absorbed to improve the durability of the tire.

Preferably, the locking bolt is movably connected in the support ring, and the locking bolt is threaded with the hub. The support ring can be mounted and used by providing the locking bolt.

Preferably, the friction point is fixedly connected to the top plate, a plurality of friction points are provided, and the plurality of friction points are symmetrically distributed on the top plate. By providing the friction points, the sliding friction resistance of the top plate can be increased, and the deformation force of the second spring can be attrited.

Preferably, the pressure resistant sheet is fixedly connected in the fixing seat, the friction sheet is fixedly connected to the pressure resistant sheet, the friction sheet is in contact with the friction point, the stopper is fixedly connected in the fixing seat, the stopper is in contact with the pressure resistant sheet, and the stopper is in contact with the friction sheet. By providing the pressure resistant sheet and the friction sheet, the pressure resistance and friction performance of an inner wall of the fixing seat can be improved.

The advantageous effect of the present invention is that the present invention relates to a non-pneumatic tire, which has the characteristics of locking and fixing the first support plate and the second support plate and supporting and cushioning the tire. In specific use, compared with traditional non-pneumatic tires, the present invention has the following beneficial effects:
First, by providing the locking mechanism, the fastening bolt, the clamping hole, the end plate, the guide rod, the first spring, the end block, the retaining ring, the elastic clamping ball, the mounting plate, the limiting plate and other structures, and setting the fastening bolt, the mounting plate can be locked and fixed, so that the first support plate and the second support plate are in a stable state, and the fastening bolt can be inserted and limited to avoid the loosening of the fastening bolt under the cooperation of the clamping hole, the elastic clamping ball and other structures.

Secondly, by providing the cushion mechanism, the support sheet, the first hinge seat, the hinge plate, the second hinge seat, the top plate, the fixing seat, the support ring, the locking bolt, the connecting plate, the top rod, the second spring and other structures, and setting the locking bolt, the support ring can be placed and used. Under the cooperation of the first hinge seat, the hinge plate, the second hinge seat, the second spring and other structures, the tire can be shock-absorbed to improve the durability of the tire.

### DESCRIPTION OF THE DRAWINGS

For ease of illustration, the present invention is described in detail by the following specific implementation and drawings.
FIG. 1 is an explosive view of the present invention;
FIG. 2 is a schematic diagram of the assembly of the present invention;
FIG. 3 is a schematic diagram of the structure of FIG. 2 after removing the protective film according to the present invention;
FIG. 4 is a front view of the structure of FIG. 3 of the present invention;
FIG. 5 is an enlarged view of a locking mechanism in FIG. 4 of the present invention;
FIG. 6 is an enlarged view of the part circled at A in FIG. 5 of the present invention;
FIG. 7 is a side view of the locking mechanism in FIG. 4 of the present invention;
FIG. 8 is an enlarged view of the part circled at B in FIG. 7 of the present invention;
FIG. 9 is an enlarged view of a cushion mechanism in FIG. 4 of the present invention;
FIG. 10 is a partial enlarged view of the structure of FIG. 9 of the present invention; and
FIG. 11 is an enlarged view of the part circled at C in FIG. 10 of the present invention.

In the figures: 1. tread; 2. protective film; 3. cushion strip; 4. first support plate; 5. second support plate; 6. first bolt; 7. second bolt; 8. hub; 9. locking mechanism; 10. cushion mechanism; 91. fastening bolt; 92. clamping hole; 93. end plate; 94. guide rod; 95. first spring; 96. end block; 97. retaining ring; 98. elastic clamping ball; 981. mounting plate; 99. limiting plate; 991. splint; 992. elastic body; 101. support sheet; 102. first hinge seat; 103. hinge plate; 104. second hinge seat; 105. top plate; 106. fixing seat; 107. support ring; 108. locking bolt; 109. connecting plate; 1091. top rod; 1092. second spring; 1093. third spring; 1094. friction point; 1095. pressure resistant sheet; 1096. friction sheet; and 1097. stopper.

### IMPLEMENTATIONS

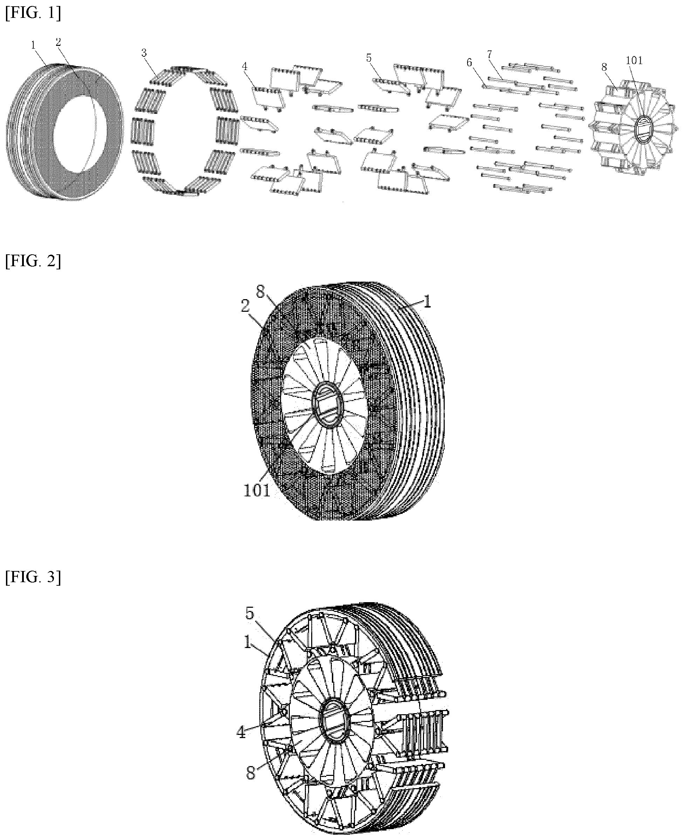

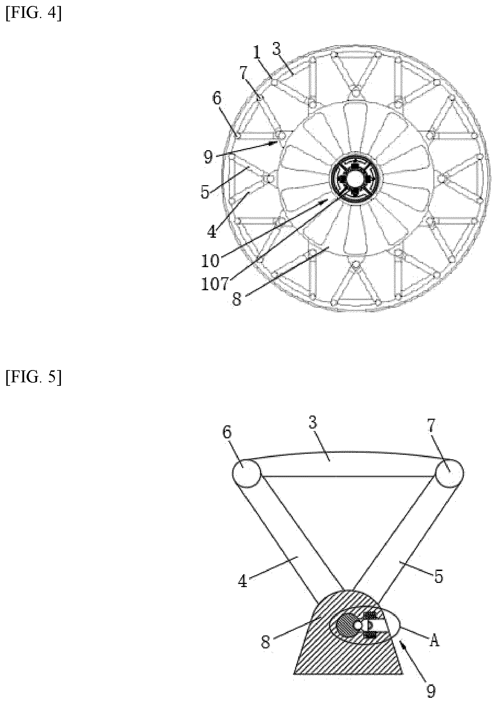

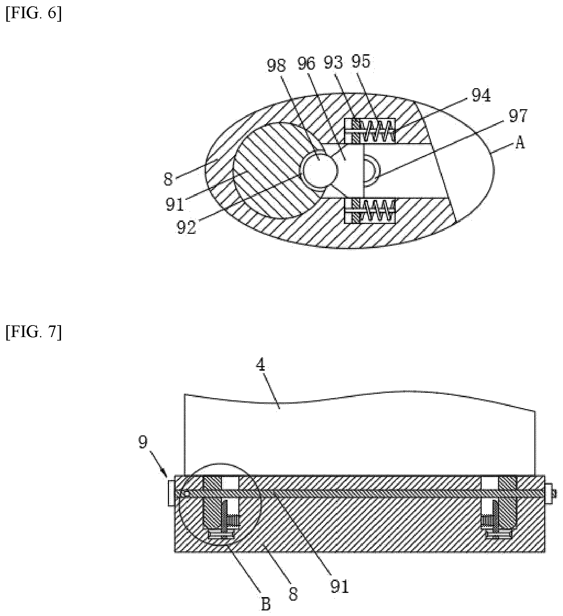

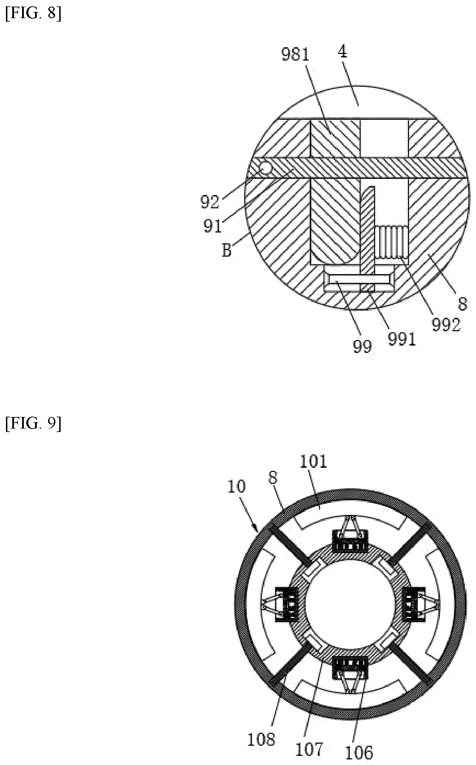

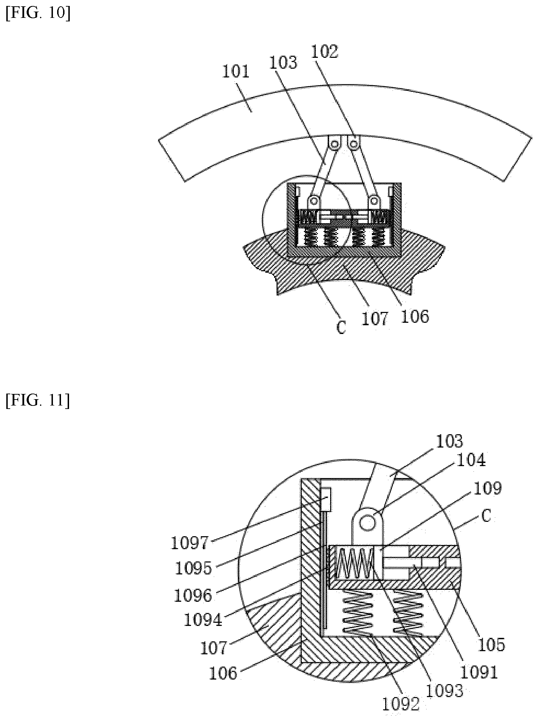

As shown in FIGS. 1-11, the specific implementation adopts the following technical solution:

### EMBODIMENT

A non-pneumatic tire includes a tread 1, a protective film 2, a cushion strip 3, a first support plate 4, a second support plate 5, a first bolt 6, a second bolt 7, a hub 8, a locking mechanism 9, and a cushion mechanism 10. The tread 1 is provided with the protective film 2, the tread 1 is provided with the cushion strip 3, the cushion strip 3 is in contact with the first support plate 4, the cushion strip 3 is in contact with the second support plate 5, the first support plate 4 and the cushion strip 3 are jointly provided with the first bolt 6, the second support plate 5 and the cushion strip 3 are jointly provided with the second bolt 7, the first support plate 4 and the second support plate 5 are jointly provided with the hub 8, the hub 8 is provided with the locking mechanism 9, and the hub 8 is provided with the cushion mechanism 10.

Specifically, the locking mechanism 9 includes a fastening bolt 91, a clamping hole 92, an end plate 93, a guide rod 94, a first spring 95, an end block 96, a retaining ring 97, an elastic clamping ball 98, a mounting plate 981, a limiting plate 99, a splint 991, and an elastic body 992. The fastening bolt 91 is movably connected in the hub 8, the fastening bolt 91 is movably connected to the first support plate 4, the fastening bolt 91 is movably connected to the second support plate 5, and the fastening bolt 91 is threaded with a nut arranged on the hub 8. The clamping hole 92 is provided in the fastening bolt 91. The end plate 93 is slidably connected in the hub 8, the guide rod 94 is fixedly connected in the hub 8, the guide rod 94 is slidably connected to the end plate 93, an outer side of the guide rod 94 is provided with the first spring 95, one end of the first spring 95 is welded with the hub 8, the other end of the first spring 95 is welded with the end plate 93, the end block 96 is fixedly connected to the end plate 93, the end block 96 is slidably connected to the hub 8, the retaining ring 97 is fixedly connected to the end block 96, the elastic clamping ball 98 is fixedly connected to the end block 96, and the elastic clamping ball 98 is slidably connected to the clamping hole 92. The mounting plate 981 can be locked and fixed by providing the fastening bolt 91, and the fastening bolt 91 can be inserted and limited under the cooperation of the end block 96, the elastic clamping ball 98 and other structures, so as to avoid loosening of the fastening bolt 91.

Specifically, the mounting plate 981 is slidably connected in the hub 8, the mounting plate 981 is fixedly connected to the first support plate 4, the mounting plate 981 is fixedly connected to the second support plate 5, and the mounting plate 981 is movably connected to the fastening bolt 91. By providing the mounting plate 981, the first support plate 4 and the second support plate 5 are convenient for connecting and using.

Specifically, the limiting plate 99 is fixedly connected in the hub 8, the splint 991 is slidally sleeved on an outer side of the limiting plate 99, the splint 991 is slidally connected to the hub 8, the elastic body 992 is bonded to the splint 991, and the other end of the elastic body 992 is bonded to the hub 8. By providing the splint 991, the mounting plate 981 can be quickly positioned.

Specifically, the cushion mechanism 10 includes a support sheet 101, a first hinge seat 102, a hinge plate 103, a second hinge seat 104, a top plate 105, a fixing seat 106, a support ring 107, a locking bolt 108, a connecting plate 109, a top rod 1091, a second spring 1092, a third spring 1093, a friction point 1094, a pressure resistant sheet 1095, a friction sheet 1096, and a stopper 1097. The support sheet 101 is contacted in the hub 8, the first hinge seat 102 is fixedly connected to the support sheet 101, the hinge plate 103 is hinged to the first hinge seat 102, the second hinge seat 104 is hinged to the hinge plate 103, and the top plate 105 is slidally connected to the second hinge seat 104. The second spring 1092 is welded with the top plate 105, and the other end of the second spring 1092 is welded with the fixing seat 106. The support ring 107 is fixedly sleeved on an outer side of the fixing seat 106, the connecting plate 109 is fixedly connected to the second hinge seat 104, the connecting plate 109 is slidally connected to the top plate 105, the top rod 1091 is fixedly connected to the connecting plate 109, and the top rod 1091 is slidally connected to the top plate 105. The third spring 1093 is welded with the connecting plate 109, and the other end of the third spring 1093 is welded with the top plate 105. Through the cooperation of the support sheet 101, the hinge plate 103, the second spring 1092, the third spring 1093 and other structures, the hub 8 can be supported and shock-absorbed to improve the durability of the tire.

Specifically, the locking bolt 108 is movably connected in the support ring 107, and the locking bolt 108 is threaded with the hub 8. The support ring 107 can be mounted and used by providing the locking bolt 108.

Specifically, the friction point 1094 is fixedly connected to the top plate 105, a plurality of friction points 1094 are provided, and the plurality of friction points 1094 are symmetrically distributed on the top plate 105. By providing the friction points 1094, the sliding friction resistance of the top plate 105 can be increased, and the deformation force of the second spring 1092 can be attrited.

Specifically, the pressure resistant sheet 1095 is fixedly connected in the fixing seat 106, the friction sheet 1096 is fixedly connected to the pressure resistant sheet 1095, the friction sheet 1096 is in contact with the friction point 1094, the stopper 1097 is fixedly connected in the fixing seat 106, the stopper 1097 is in contact with the pressure resistant sheet 1095, and the stopper 1097 is in contact with the friction sheet 1096. By providing the pressure resistant sheet 1095 and the friction sheet 1096, the pressure resistance and friction performance of an inner wall of the fixing seat 106 can be improved.

The use state of the present invention is as follows: when in use, the mounting plate 981 can be pushed to be inserted into the hub 8; during this process, the splint 991 is forced to slide stably along the surface of the limiting plate 99, and the elastic body 992 is deformed by force; under the deformation of the elastic body 992, the splint 991 can be pushed to hold the mounting plate 981, so as to clamp and position the mounting plate 981, and then the retaining ring 97 is pulled to move away from the fastening bolt 91, so as to drive the end block 96 to slide, and further drive the end plate 93 to slide stably along the surface of the guide rod 94; the first spring 95 is deformed by force, and then the mounting plate 981 is pushed to be inserted into the hub 8, and the fastening bolt 91 is pushed to pass through the hub 8 and the mounting plate 981, so that the fastening bolt 91 is in contact with the nut arranged on the hub 8; the fastening bolt 91 is rotated, so that the fastening bolt 91 is fixedly connected under the threaded connection, and then the mounting plate 981 is locked and fixed, so that the mounting plate 981 drives the first support plate 4 and the second support plate 5 to be in a long-term stable state.

The support sheet 101 can be pushed to be in contact with the inner wall of the hub 8, and then the locking bolt 108 is pushed to pass through the support ring 107, so that the locking bolt 108 is in contact with the hub 8; the locking bolt 108 is rotated, and the locking bolt 108 is fixedly connected under the threaded connection, so that the support ring 107 can be mounted and used. By providing the support sheet 101, the hub 8 can be effectively supported. During the use of the tire, the support sheet 101 is pressed by an external force to move in the direction of approaching the support ring 107. Under the hinge relationship of the first hinge seat 102, two adjacent hinge plates 103 are pushed to move away from each other, and then the second hinge seat 104 is pushed to slide. The second hinge seat 104 is forced to drive the connecting plate 109 to slide. The third spring 1093 is deformed by force. Under the force, the top plate 105 slides in the direction of approaching the inner side of the fixing seat 106. The second spring 1092 is deformed by force to cushion and release the external force. When the top plate 105 is forced to move, it can drive the friction point 1094 to slide along the surface of the friction sheet 1096 and attrite the deformation force of the second spring 1092. When the second spring 1092 recovers the deformation, it can be obtained in the same way that the deformation force is attrited under the action of the friction sheet 1096 and the friction point 1094, and the top plate 105 can be limited by providing the stopper 1097.

## Claims

1. A non-pneumatic tire, comprising a tread (1), a cushion strip (3), a first support plate (4), a second support plate (5), a first bolt (6), a second bolt (7), a hub (8), a locking mechanism (9), and a cushion mechanism (10); wherein the tread (1) is provided with the cushion strip (3), the cushion strip (3) is in contact with the first support plate (4), the cushion strip (3) is in contact with the second support plate (5), the first support plate (4) and the cushion strip (3) are jointly provided with the first bolt (6), the second support plate (5) and the cushion strip (3) are jointly provided with the second bolt (7), the first support plate (4) and the second support plate (5) are jointly provided with the hub (8), the hub (8) is provided with the locking mechanism (9), and **characterized in that** the non-pneumatic tire further comprises a protective film (2), the tread (1) is provided with the protective film (2) and the hub (8) is provided with the cushion mechanism (10).

2. The non-pneumatic tire according to claim 1, **characterized in that** the locking mechanism (9) comprises a fastening bolt (91), a clamping hole (92), an end plate (93), a guide rod (94), a first spring (95), an end block (96), a retaining ring (97), an elastic clamping ball (98), a mounting plate (981), a limiting plate (99), a splint (991), and an elastic body (992); the fastening bolt (91) is movably connected in the hub (8), the fastening bolt (91) is movably connected to the first support plate (4), the fastening bolt (91) is movably connected to the second support plate (5), the fastening bolt (91) is threaded with a nut arranged on the hub (8), the clamping hole (92) is provided in the fastening bolt (91), the end plate (93) is slidably connected in the hub (8), the guide rod (94) is fixedly connected in the hub (8), the guide rod (94) is slidably connected to the end plate (93), an outer side of the guide rod (94) is provided with the first spring (95), one end of the first spring (95) is welded with the hub (8), the other end of the first spring (95) is welded with the end plate (93), the end block (96) is fixedly connected to the end plate (93), the end block (96) is slidably connected to the hub (8), the retaining ring (97) is fixedly connected to the end block (96), the elastic clamping ball (98) is fixedly connected to the end block (96), and the elastic clamping ball (98) is slidably connected to the clamping hole (92).

3. The non-pneumatic tire according to claim 2, **characterized in that** the mounting plate (981) is slidably connected in the hub (8), the mounting plate (981) is fixedly connected to the first support plate (4), the mounting plate (981) is fixedly connected to the second support plate (5), and the mounting plate (981) is movably connected to the fastening bolt (91).

4. The non-pneumatic tire according to claim 2, **characterized in that** the limiting plate (99) is fixedly connected in the hub (8), the splint (991) is slidally sleeved on an outer side of the limiting plate (99), the splint (991) is slidally connected to the hub (8), the elastic body (992) is bonded to the splint (991), and the other end of the elastic body (992) is bonded to the hub (8).

5. The non-pneumatic tire according to claim 1, **characterized in that** the cushion mechanism (10) includes a support sheet (101), a first hinge seat (102), a hinge plate (103), a second hinge seat (104), a top plate (105), a fixing seat (106), a support ring (107), a locking bolt (108), a connecting plate (109), a top rod (1091), a second spring (1092), a third spring (1093), a friction point (1094), a pressure resistant sheet (1095), a friction sheet (1096), and a stopper (1097); the support sheet (101) is contacted in the hub (8), the first hinge seat (102) is fixedly connected to the support sheet (101), the hinge plate (103) is hinged to the first hinge seat (102), the second hinge seat (104) is hinged to the hinge plate (103), the top plate (105) is slidally connected to the second hinge seat (104), the second spring (1092) is welded with the top plate (105), the other end of the second spring (1092) is welded with the fixing seat (106), the support ring (107) is fixedly sleeved on an outer side of the fixing seat (106), the connecting plate (109) is fixedly connected to the second hinge seat (104), the connecting plate (109) is slidally connected to the top plate (105), the top rod (1091) is fixedly connected to the connecting plate (109), the top rod (1091) is slidally connected to the top plate (105), the third spring (1093) is welded with the connecting plate (109), and the other end of the third spring (1093) is welded with the top plate (105).

6. The non-pneumatic tire according to claim 5, **characterized in that** the locking bolt (108) is movably connected in the support ring (107), and the locking bolt (108) is threaded with the hub (8).

7. The non-pneumatic tire according to claim 5, **characterized in that** the friction point (1094) is fixedly connected to the top plate (105), a plurality of friction points (1094) are provided, and the plurality of friction points (1094) are symmetrically distributed on the top plate (105).

8. The non-pneumatic tire according to claim 5, **characterized in that** the pressure resistant sheet (1095) is fixedly connected in the fixing seat (106), the friction sheet (1096) is fixedly connected to the pressure resistant sheet (1095), the friction sheet (1096) is in contact with the friction point (1094), the stopper (1097) is fixedly connected in the fixing seat (106), the stopper (1097) is in contact with the pressure resistant sheet (1095), and the stopper (1097) is in contact with the friction sheet (1096).

## Patentansprüche

1. Luftloser Reifen, umfassend eine Lauffläche (1), einen Polsterstreifen (3), eine erste Stützplatte (4), eine zweite Stützplatte (5), einen ersten Bolzen (6), einen zweiten Bolzen (7), eine Nabe (8), einen Verriegelungsmechanismus (9) und einen Polstermechanismus (10); wobei die Lauffläche (1) mit dem Polsterstreifen (3) versehen ist, wobei der Polsterstreifen (3) mit der ersten Stützplatte (4) in Kontakt steht, wobei der Polsterstreifen (3) mit der zweiten Stützplatte (5) in Kontakt steht, wobei die erste Stützplatte (4) und der Polsterstreifen (3) gemeinsam mit dem ersten Bolzen (6) versehen sind, wobei die zweite Stützplatte (5) und der Polsterstreifen (3) gemeinsam mit dem zweiten Bolzen (7) versehen sind, wobei die erste Stützplatte (4) und die zweite Stützplatte (5) gemeinsam mit der Nabe (8) versehen sind, wobei die Nabe (8) mit dem Verriegelungsmechanismus (9) versehen ist, und **dadurch gekennzeichnet, dass** der luftlose Reifen ferner einen Schutzfilm (2) umfasst, wobei die Lauffläche (1) mit dem Schutzfilm (2) versehen ist und die Nabe (8) mit dem Polstermechanismus (10) versehen ist.

2. Luftloser Reifen nach Anspruch 1, **dadurch gekennzeichnet, dass** der Verriegelungsmechanismus (9) einen Befestigungsbolzen (91), ein Klemmloch (92), eine Endplatte (93), eine Führungsstange (94), eine erste Feder (95), einen Endblock (96), einen Sicherungsring (97), eine elastische Klemmkugel (98), eine Montageplatte (981), eine Begrenzungsplatte (99), einen Splint (991) und einen elastischen Körper (992) umfasst; wobei der Befestigungsbolzen (91) beweglich in der Nabe (8) verbunden ist, wobei der Befestigungsbolzen (91) beweglich mit der ersten Stützplatte (4) verbunden ist, wobei der Befestigungsbolzen (91) beweglich mit der zweiten Stützplatte (5) verbunden ist, wobei der Befestigungsbolzen (91) mit einer an der Nabe (8) angeordneten Mutter verschraubt ist, wobei das Klemmloch (92) in dem Befestigungsbolzen (91) vorgesehen ist, wobei die Endplatte (93) gleitend in der Nabe (8) verbunden ist, wobei die Führungsstange (94) fest in der Nabe (8) verbunden ist, wobei die Führungsstange (94) gleitend mit der Endplatte (93) verbunden ist, wobei eine Außenseite der Führungsstange (94) mit der ersten Feder (95) versehen ist, wobei ein Ende der ersten Feder (95) mit der Nabe (8) verschweißt ist, wobei das andere Ende der ersten Feder (95) mit der Endplatte (93) verschweißt ist, wobei der Endblock (96) fest mit der Endplatte (93) verbunden ist, wobei der Endblock (96) gleitend mit der Nabe (8) verbunden ist, wobei der Sicherungsring (97) fest mit dem Endblock (96) verbunden ist, wobei die elastische Klemmkugel (98) fest mit dem Endblock (96) verbunden ist, und wobei die elastische Klemmkugel (98) gleitend mit dem Klemmloch (92) verbunden ist.

3. Luftloser Reifen nach Anspruch 2, **dadurch gekennzeichnet, dass** die Montageplatte (981) gleitend in der Nabe (8) verbunden ist, wobei die Montageplatte (981) fest mit der ersten Stützplatte (4) verbunden ist, wobei die Montageplatte (981) fest mit der zweiten Stützplatte (5) verbunden ist, und wobei die Montageplatte (981) beweglich mit dem Befestigungsbolzen (91) verbunden ist.

4. Luftloser Reifen nach Anspruch 2, **dadurch gekennzeichnet, dass** die Begrenzungsplatte (99) fest in der Nabe (8) verbunden ist, wobei der Splint (991) gleitend auf einer Außenseite der Begrenzungsplatte (99) aufgeschoben ist, wobei der Splint (991) gleitend mit der Nabe (8) verbunden ist, wobei der elastische Körper (992) mit dem Splint (991) verklebt ist, und wobei das andere Ende des elastischen Körpers (992) mit der Nabe (8) verklebt ist.

5. Luftloser Reifen nach Anspruch 1, **dadurch gekennzeichnet, dass** der Polstermechanismus (10) ein Stützblatt (101), einen ersten Scharniersitz (102), eine Scharnierplatte (103), einen zweiten Scharniersitz (104), eine Deckplatte (105), einen Befestigungssitz (106), einen Stützring (107), einen Verriegelungsbolzen (108), eine Verbindungsplatte (109), eine Druckstange (1091), eine zweite Feder (1092), eine dritte Feder (1093), einen Reibungspunkt (1094), ein druckbeständiges Blatt (1095), ein Reibungsblatt (1096) und einen Anschlag (1097) umfasst; wobei das Stützblatt (101) in der Nabe (8) in Kontakt steht, wobei der erste Scharniersitz (102) fest mit dem Stützblatt (101) verbunden ist, wobei die Scharnierplatte (103) gelenkig mit dem ersten Scharniersitz (102) verbunden ist, wobei der zweite Scharniersitz (104) gelenkig mit der Scharnierplatte (103) verbunden ist, wobei die Deckplatte (105) gleitend mit dem zweiten Scharniersitz (104) verbunden ist, wobei die zweite Feder (1092) mit der Deckplatte (105) verschweißt ist, wobei das andere Ende der zweiten Feder (1092) mit dem Befestigungssitz (106) verschweißt ist, wobei der Stützring (107) fest auf einer Außenseite des Befestigungssitzes (106) aufgeschoben ist, wobei die Verbindungsplatte (109) fest mit dem zweiten Scharniersitz (104) verbunden ist, wobei die Verbindungsplatte (109) gleitend mit der Deckplatte (105) verbunden ist, wobei die Druckstange (1091) fest mit der Verbindungsplatte (109) verbunden ist, wobei die Druckstange (1091) gleitend mit der Deckplatte (105) verbunden ist, wobei die dritte Feder (1093) mit der Verbindungsplatte (109) verschweißt ist, und wobei das andere Ende der dritten Feder (1093) mit der Deckplatte (105) verschweißt ist.

6. Luftloser Reifen nach Anspruch 5, **dadurch gekennzeichnet, dass** der Verriegelungsbolzen (108) beweglich in dem Stützring (107) verbunden ist, und wobei der Verriegelungsbolzen (108) mit der Nabe (8) verschraubt ist.

7. Luftloser Reifen nach Anspruch 5, **dadurch gekennzeichnet, dass** der Reibungspunkt (1094) fest mit der Deckplatte (105) verbunden ist, wobei mehrere Reibungspunkte (1094) vorgesehen sind, und wobei die mehreren Reibungspunkte (1094) symmetrisch auf der Deckplatte (105) verteilt sind.

8. Luftloser Reifen nach Anspruch 5, **dadurch gekennzeichnet, dass** das druckbeständige Blatt (1095) fest in dem Befestigungssitz (106) verbunden ist, wobei das Reibungsblatt (1096) fest mit dem druckbeständigen Blatt (1095) verbunden ist, wobei das Reibungsblatt (1096) mit dem Reibungspunkt (1094) in Kontakt steht, wobei der Anschlag (1097) fest in dem Befestigungssitz (106) verbunden ist, wobei der Anschlag (1097) mit dem druckbeständigen Blatt (1095) in Kontakt steht, und wobei der Anschlag (1097) mit dem Reibungsblatt (1096) in Kontakt steht.

## Revendications

1. Pneu sans air, comprenant une bande de roulement (1), une bande d'amortissement (3), une première plaque de support (4), une deuxième plaque de support (5), un premier boulon (6), un deuxième boulon (7), un moyeu (8), un mécanisme de verrouillage (9) et un mécanisme d'amortissement (10) ; dans lequel la bande de roulement (1) est pourvue de la bande d'amortissement (3), la bande d'amortissement (3) est en contact avec la première plaque de support (4), la bande d'amortissement (3) est en contact avec la deuxième plaque de support (5), la première plaque de support (4) et la bande d'amortissement (3) sont pourvues conjointement du premier boulon (6), la deuxième plaque de support (5) et la bande d'amortissement (3) sont pourvues conjointement du deuxième boulon (7), la première plaque de support (4) et la deuxième plaque de support (5) sont pourvues conjointement du moyeu (8), le moyeu (8) est pourvu du mécanisme de verrouillage (9), et **caractérisé en ce que** le pneu sans air comprend en outre un film protecteur (2), la bande de roulement (1) est pourvue du film protecteur (2) et le moyeu (8) est pourvu du mécanisme d'amortissement (10).

2. Pneu sans air selon la revendication 1, **caractérisé en ce que** le mécanisme de verrouillage (9) comprend un boulon de fixation (91), un trou de serrage (92), une plaque d'extrémité (93), une tige de guidage (94), un premier ressort (95), un bloc d'extrémité (96), un anneau de rétention (97), une bille de serrage élastique (98), une plaque de montage (981), une plaque de restriction (99), une clavette (991) et un corps élastique (992) ; le boulon de fixation (91) est relié de manière mobile dans le moyeu (8), le boulon de fixation (91) est relié de manière mobile à la première plaque de support (4), le boulon de fixation (91) est relié de manière mobile à la deuxième plaque de support (5), le boulon de fixation (91) est vissé avec un écrou disposé sur le moyeu (8), un trou de serrage (92) est ménagé dans le boulon de fixation (91), la plaque d'extrémité (93) est reliée de manière coulissante dans le moyeu (8), la tige de guidage (94) est reliée de manière fixe dans le moyeu (8), la tige de guidage (94) est reliée de manière coulissante à la plaque d'extrémité (93), une extrémité externe de la tige de guidage (94) est pourvue du premier ressort (95), une extrémité du premier ressort (95) est soudée au moyeu (8), l'autre extrémité du premier ressort (95) est soudée à la plaque d'extrémité (93), le bloc d'extrémité (96) est relié de manière fixe à la plaque d'extrémité (93), le bloc d'extrémité (96) est relié de manière coulissante au moyeu (8), l'anneau de rétention (97) est relié de manière fixe au bloc d'extrémité (96), la bille de serrage élastique (98) est reliée de manière fixe au bloc d'extrémité (96), et la bille de serrage élastique (98) est reliée de manière coulissante au trou de serrage (92).

3. Pneu sans air selon la revendication 2, **caractérisé en ce que** la plaque de montage (981) est reliée de manière coulissante au moyeu (8), la plaque de montage (981) est reliée de manière fixe à la première plaque de support (4), la plaque de montage (981) est reliée de manière fixe à la deuxième plaque de support (5), et la plaque de montage (981) est reliée de manière mobile au boulon de fixation (91).

4. Pneu sans air selon la revendication 2, **caractérisé en ce que** la plaque de restriction (99) est reliée de manière fixe dans le moyeu (8), la clavette (991) est insérée de manière coulissante sur un côté externe de la plaque de restriction (99), la clavette (991) est reliée de manière coulissante au moyeu (8), le corps élastique (992) est collé à la clavette (991) et l'autre extrémité du corps élastique (992) est collée au moyeu (8).

5. Pneu sans air selon la revendication 1, **caractérisé en ce que** le mécanisme d'amortissement (10) comprend une nappe de support (101), un premier siège de charnière (102), une plaque de charnière (103), un deuxième siège de charnière (104), une plaque supérieure (105), un siège de fixation (106), un anneau de support (107), un boulon de verrouillage (108), une plaque de liaison (109), une tige supérieure (1091), un deuxième ressort (1092), un troisième ressort (1093), un point de friction (1094), une nappe résistante à la pression (1095), une nappe de friction (1096) et une butée (1097) ; la nappe de support (101) est mise en contact avec le moyeu (8), le premier siège de charnière (102) est relié de manière fixe à la nappe de support (101), la plaque de charnière (103) est articulée avec le premier siège de charnière (102), le deuxième siège de charnière (104) est articulé avec la plaque de charnière (103), la plaque supérieure (105) est reliée de manière coulissante au deuxième siège de charnière (104), le deuxième ressort (1092) est soudé à la plaque supérieure (105), l'autre extrémité du deuxième ressort (1092) est soudée au siège de fixation (106), l'anneau de support (107) est emmanché de manière fixe sur un côté externe du siège de fixation (106), la plaque de liaison (109) est reliée de manière fixe au deuxième siège de charnière (104), la plaque de liaison (109) est reliée de manière coulissante à la plaque supérieure (105), la tige supérieure (1091) est reliée de manière fixe à la plaque de liaison (109), la tige supérieure (1091) est reliée de manière coulissante à la plaque supérieure (105), le troisième ressort (1093) est soudé à la plaque de liaison (109), et l'autre extrémité du troisième ressort (1093) est soudée à la plaque supérieure (105).

6. Pneu sans air selon la revendication 5, **caractérisé en ce que** le boulon de verrouillage (108) est relié de manière mobile à l'anneau de support (107), et le boulon de verrouillage (108) est vissé dans le moyeu (8).

7. Pneu sans air selon la revendication 5, **caractérisé en ce que** le point de friction (1094) est relié de manière fixe à la plaque supérieure (105), une pluralité de points de friction (1094) sont prévus et la pluralité de points de friction (1094) sont répartis de manière symétrique sur la plaque supérieure (105).

8. Pneu sans air selon la revendication 5, **caractérisé en ce que** la nappe résistante à la pression (1095) est reliée de manière fixe dans le siège de fixation (106), la nappe de friction (1096) est reliée de manière fixe à la nappe résistante à la pression (1095), la nappe de friction (1096) est en contact avec le point de friction (1094), la butée (1097) est reliée de manière fixe dans le siège de fixation (106), la butée (1097) est en contact avec la nappe résistante à la pression (1095) et la butée (1097) est en contact avec la nappe de friction (1096).
